(19) Europäisches Patentamt
European Patent Office
Office européen des brevets

(11) EP 0 648 412 B1

(12) EUROPEAN PATENT SPECIFICATION

(45) Date of publication and mention of the grant of the patent:
**02.12.1998 Bulletin 1998/49**

(21) Application number: **94114027.9**

(22) Date of filing: **07.09.1994**

(51) Int. Cl.$^6$: **A01N 25/08**
// (A01N25/08, 51:00, 47:44, 47:42, 47:40, 43:78, 43:50, 43:40)

(54) **Poisonous baits for controlling soil-inhabiting pests**

Giftköder zur Bekämpfung von Bodeninsekten

Appât empoisonné pour lutter contre les insectes terricoles

(84) Designated Contracting States:
**BE CH DE ES FR GB IT LI NL**

(30) Priority: **20.09.1993 JP 255309/93**

(43) Date of publication of application:
**19.04.1995 Bulletin 1995/16**

(73) Proprietor:
**NIHON BAYER AGROCHEM K.K.**
**Tokyo 108 (JP)**

(72) Inventors:
- **Wada, Yuzuru**
  **Hachioji-shi, Tokyo (JP)**
- **Tsuboi, Shin-ichi**
  **Kokubunji-machi, Tochigi (JP)**
- **Otsu, Yuichi**
  **Oyama-shi, Tochigi (JP)**
- **Isono, Kunihiro**
  **Shimotsuga-gun, Tochigi (JP)**
- **Sone, Shinzaburo**
  **Yuki-shi, Ibaraki (JP)**
- **Maki, Takamasa**
  **Oyama-shi, Tochigi (JP)**
- **Hanaki, Katsuhiko**
  **Oyama-shi, Tochigi (JP)**
- **Abe, Takahisa**
  **Oyama-shi, Tochigi (JP)**

(74) Representative:
**Linkenheil, Dieter**
**Bayer AG**
**Konzernbereich RP**
**Patente und Lizenzen**
**51368 Leverkusen (DE)**

(56) References cited:
**EP-A- 0 192 060**
**DE-A- 4 111 389**
**JP-A- 2 124 802**
**JP-A- 4 046 101**
**JP-A- 4 152 827**
**US-A- 5 207 389**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 648 412 B1

Printed by Xerox (UK) Business Services
2.16.6/3.4

## Description

The present invention relates to baits effectively used for controlling pests inhabiting soil.

Japanese Patent Application Publication No. Sho 63-26721, Japanese Patent Application Disclosures Nos. Sho 61-183201, Sho 62-19505, Sho 63-218604, Sho 63-218605, and Hei 1-143806, etc., disclose poisonous baits having an improved edibility.

Further, Japanese Patent Application Disclosure No. Sho 63-135308 disclosed the utilization of microorganism as a pesticidal agent.

Moreover, Japanese Patent Application Disclosure No. Hei 2-124802 disclosed stabilized control agents for soil-inhabiting pests comprising vegetable organic matter.

The inventors of the present application have now found baits for controlling soil-inhabiting pests comprising active compounds represented by the general formula

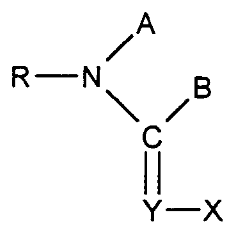

(I)

wherein R represents hydrogen atom, an acyl, alkyl or an optionally substituted heteroarylalkyl,

A represents hydrogen atom, an alkyl or a divalent group connected to the substituent B,

B represents an alkyl, —S—R,

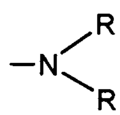

or a divalent group connected to the substituent A, wherein R has the same meaning as mentioned above,

Y represents =N- or

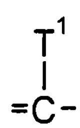

,

wherein $T^1$ represents hydrogen atom or an optionally substituted alkyl group, and

X represents an electron attractive group

comprising as excipients materials used as artificial culture media for mushrooms selected from crushed or ground wood or wood chips of broadleaved trees and comprising binders selected from: Starch, soluble starch, α-starch, dextrin, amylose, amiropectin, lignin, sodium lignin sulfonate, potassium ligninsulfonate, calcium ligninsulfonate, cellulose, methyl cellulose, ethyl cellulose, carboxymethyl cellulose, hydroxyethyl cellulose, hydroxypropyl cellulose, hydroxypropylmethyl cellulose, carboxymethyl starch, hydroxypropyl starch, sodium carboxymethyl cellulose, gum arabic, gelatin, casein, xanthane gum, alginic acid, sodium alginate, sodium silicate, polyvinyl alcohol, polypropylene glycol, polyethylenepolypropylene block polymer, sodium polyacrylate.

These baits exhibit an excellent pesticidal activity on soil-inhabiting pests.

The baits according to the present invention can be prepared according to conventional production processes such as tabletting, briquetting, etc., wherein an artificial culture medium for mushrooms or the medium obtained after the culture thereof, is dried, followed by adding thereto, the below-mentioned active compounds for controlling soil-inhabiting pests, together with adjuvants such as binder and like.

As active compounds for controlling soil-inhabiting pests to be employed in the poisonous baits for controlling soil-inhabiting pests according to the present invention are represented by the general formula (I), wherein preferably,

R represents hydrogen atom, formyl, a $C_{1-4}$-alkcarbonyl, benzoyl, a $C_{1-4}$-alkylsulfonyl, $C_{1-6}$-alkyl, or an optionally substitutable heteroarylmethyl having up to a six membered ring and at least one nitrogen atom and further optionally selected hetero atom or atoms,

A represents hydrogen atom, a $C_{1-4}$-alkyl, ethylene, trimethylene, or

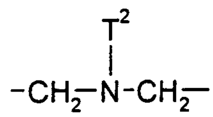
,

wherein $T^2$ represents hydrogen atom, a $C_{1-4}$-alkyl or $C_{1-4}$-alkylcarbonyl,

B represents a $C_{1-4}$-alkyl, —S—R,

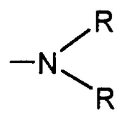
,

-S-, methylene or

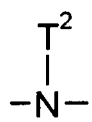
,

wherein R and $T^2$ have the same meanings mentioned above,

Y represents =N- or =CH-, and

X represents nitro or cyano.

More preferably, R represents hydrogen atom, formyl, acetyl, a $C_{1-4}$-alkyl, 2-chloro-5-pyridylmethyl or 2-chloro-5-thiazolyl,

A represents hydrogen atom, a $C_{1-4}$-alkyl, ethylene, trimethylene, or

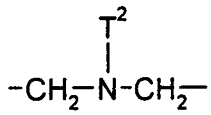 ,

wherein $T^2$ represents methyl or ethyl.

B represents a $C_{1-4}$ alkyl, -S-R,

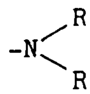 ,

-S-, methylene, or

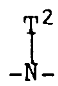 ,

wherein R and $T^2$ have the same meanings as defined above,

Y represents =N- or =CH-, and

X represents nitro or cyano.

Further more preferably, R represents 2-chloro-5-pyridylmethyl or 2-chloro-5-thiazolyl,

A represents hydrogen atom, a $C_{1-4}$ alkyl, ethylene, trimethylene, or

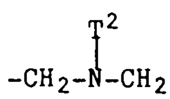 ,

wherein $T^2$ represents methyl or ethyl,

B represents a $C_{1-4}$ alkyl, -S-R,

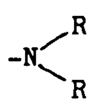 ,

-S-, methylene, or

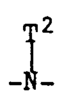 ,

wherein R and $T^2$ have the same meanings as defined above,

Y represents =N- or =CH- , and

X represents nitro or cyano.

As the concrete examples of the nitro-series and cyano-series insecticidal compounds may be mentioned the following compounds:

N-cyano-N-(2-chloro-5-pyridylmethyl)-N'-methylacetoamidine,

1-[N-(6-chloro-3-pyridylmethyl)-N-ethylamino]-1-methylamino-2-nitroethylene,

1-(2-chloro-5-pyridylmethyl)-5-methyl-2-nitroimino-hexahydro-1,3,5-triazine,

1-(2-chloro-5-thiazolylmethyl)-3,5-dimethyl-2-nitroimino-hexahydro-1,3,5-triazine,

1-(2-chloro-5-pyridylmethyl)-3,5-dimethyl-2-nitroimino-hexahydro-1,3,5-triazine,

1-(2-chloro-5-pyridylmethyl)-2-nitromethylene-imidazolidine,

1-[N-(2-chloro-5-thiazolylmethyl)-N-ethylamino]-1-methylamino-2-nitroethylene,

3-(2-chloro-5-pyridylmethyl)-2-nitromethylene-thiazolidine,

1-(2-chloro-5-pyridylmethyl)-2-(1-nitro-2-allylthioethylidene)-imidazolidine,

1-(2-chloro-5-pyridylmethyl)-2-(1-nitro-2-ethylthioethylidene)-imidazolidine,

1-(2-chloro-5-pyridylmethyl)-2-(1-nitro-2-β-methylallylthioethylidene)-imidazolidine,

methyl-[3-(2-chloro-5-pyridylmethyl)-1-methyl-2-nitro]guanidinoformate,

1-(2-chloro-5-pyridylmethylamino)-1-methylthio-2-nitroethylene,

1-(2-chloro-5-pyridylmethylamino)-1-methylamino-2-nitroethylene,

1-(2-chloro-5-pyridylmethyl)-3-nitro-2-methylisothiourea,

1-(2-chloro-5-pyridylmethyl)-1-methyl-2-nitroguanidine,

1-(2-chloro-5-pyridylmethylamino)-1-dimethylamino-2-nitroethylene,

1-[N-(2-chloro-5-pyridylmethyl)-N-methylamino]-1-methylamino-2-nitroethylene,

1-[N-(2-chloro-5-pyridylmethyl)-N-methylamino]-1-dimethylamino-2-nitroethylene,

3-(2-chloro-5-pyridylmethyl)-1,1-dimethyl-2-nitroguanidine,

1-(2-chloro-5-pyridylmethylamino)-1-ethylamino-2-nitroethylene,

1-amino-1-[N-(2-chloro-5-pyridylmethyl)-N-methylamino]-2-nitroethylene,

3-(2-chloro-5-pyridylmethyl)-1,3-dimethyl-2-nitroguanidine,

3-(2-chloro-5-pyridylmethyl)-1,1,3-trimethyl-2-nitroguanidine,

1-amino-1-[N-(2-chloro-5-pyridylmethyl)-N-ethylamino]-2-nitroethylene,

1-[N-(2-chloro-5-pyridylmethyl)-N-n-propylamino]-1-methylamino-2-nitroethylene,

1-[N-(2-chloro-5-pyridylmethyl)-N-ethylamino]-1-ethylamino-2-nitroethylene,

3-(2-chloro-5-pyridylmethyl)-3-ethyl-1-methyl-2-nitroguanidine,

3-(2-chloro-5-thiazolylmethyl)-1-methyl-2-nitroguanidine, and

1-(6-chloro-3-pyridylmethyl)-N-nitroimidazolidin—2-ylideneamine,

N-cyano-N-(2-chloro-5-pyridylmethyl)-N'-methylacetoamidine,

1-[N-(6-chloro-3-pyridylmethyl)-N-ethylamino]-1-methylamino-2-nitroethylene.

To the poisonous baits for controlling soil-inhabiting pests according to the present invention may be further added insectparasitic fungi such as, for preferable examples, Metarhizium, Metarhizium anisopliae, Beauver and Beauveria bassiana, etc.

As the excipients to be employed in the poisonous baits for controlling soil-inhabiting pests according to the present invention may be mentioned wood chips of broadleaved trees such as beech, oak and like.

As binders to be employed in the poisonous baits for controlling soil-inhabiting pests according to the present invention may be mentioned, for example, the following substances,

Starch, soluble starch, α-starch, dextrin, amylose, amiropectin, lignin, sodium lignin sulfonate, potassium ligninsulfonate, calcium ligninsulfonate, cellulose, methyl cellulose, ethyl cellulose, carboxymethyl cellulose, hydroxyethyl cellulose, hydroxypropyl cellulose, hydroxypropylmethyl cellulose, carboxymethyl starch, hydroxypropyl starch, sodium carboxymethyl cellulose, gum arabic, gelatin, casein, xanthane gum, alginic acid, sodium alginate, sodium silicate, polyvinyl alcohol, polypropylene glycol, polyethylenepolypropylene block polymer, sodium polyacrylate.

The poisonous baits according to the present invention exhibit an excellent control effect on soil-inhabiting pests and effectively. control the following soil-inhabiting pests, though they may also be used against the pests other than those mentioned above. Further, they can be used all the pests that emerge on and/or inhabit soil surface, or vicinity thereof.

As the examples of the pests may be mentioned the following pests and insects:

From the order of Coleoptera, Anomala albopiosa, Anomala cuprea, Popillia japonica, Adoretus tenuimaculatus, Anomala diversa, Anomala rufocuprea, Anomala schoenfeldti, Lachnosterna morosa, Agriotes ogurae, Melanotus okinawenisis, Melanotus sakisimensis, Diabrotica spp., Aracerus fasciculatus, Sphenophorus venatus vestinus, Sceptieus griseus, Scepticus uniformis, and so on, for example.

From the order of Diptera, Ophiomyia lappivora, Bradisia agrestis, Delia antiqua, Delia floralis, Hylemya Platura, Dicranoptycha spp., and so on, for example.

From the order of Lepidoptera, Agrotis segetum, Agrotis ipsilon, and so on, for example.

The artificial culture medium for mushrooms and the medium obtained after the culture thereof, which are used as excipient for the poisonous baits according to the present invention have attracting action for soil-inhabiting insects, particularly larvae of gold beetles and preferentially eaten by them.

Further, after the application of the poisonous baits according to the present invention, the portion of the excipient that has not been eaten by soil-inhabiting pests will automatically decompose in the soil to form organic manure by itself so that it is advantageous even in view of the environmental problem.

The poisonous baits for controlling soil-inhabiting pests according to the present invention may be used in the forms of granules, tablets, rods and so on and can be formed according to any known conventional methods for the production of pesticidal formulation.

Re the poisonous baits for controlling soil-inhabiting pests according to the present invention, the mixing ratio by weight of the respective compositional components may be varied within a relatively wide range and, the medium obtained after artificial culture of mushrooms may be used from 100 to 50,000, preferably from 1,000 to 20,000 parts by weight per one part by weight of the active compound of the poisonous baits for controlling soil-inhabiting pests according to the present invention.

The dosage may be varied dependent on the farm products as well as emergency condition of soil-inhabiting pests, but it may usually be in the range of from about 0.05 to 3 kg/ha, preferably from about 0.1 to 1 kg/ha, in terms of the pesticidally active component.

The present invention provides poisonous baits for controlling soil-inhabiting pests which exhibit a number of excellent effects such as requiring no pre-treatments such as soil mixing, thus ensuring a labour-saving application, keeping the dosages at a lower level, and prolonging the insecticidal activity for a long period of time. Moreover, the excipients to be employed together with the present poisonous baits decompose in the soil to be converted into organic manure, which is an additional excellent effect.

The excellent effect exhibited by the poisonous baits for controlling soil-inhabiting pests according to the present invention may be demonstrated by the following examples which, however, should not be considered to limit the scope of the present invention.

Formulation 1

Artificial medium used for culture of Maitake mushroom was dried by a fluidized layer dryer. 69.97 parts of the thus obtained dried medium, 0.03 parts of an active compound for controlling soil-inhabiting pests, and 30 parts of $\alpha$-starch, were mixed in a universal mixer. The resulting mixture 30 g was tableted with the use of a mold having a diameter of 50 mm at a mold pressure of 1,000 kg/cm$^2$ to form tablets.

Formulation 2

Artificial medium used for culture of Maitake mushroom was dried by a fluidized layer dryer. 69.94 parts of the thus obtained dried medium, 0.06 parts of an active compound for controlling soil-inhabiting pests, and 30 parts of crystallized cellulose, were mixed in a universal mixer. The resulting mixture 30 g was tableted with the use of a mold having a diameter of 50 mm at a mold pressure of 1,000 kg/cm$^2$ to form tablets.

Formulation 3

Artificial medium used for culture of Maitake mushroom was dried by a fluidized layer dryer. 69.96 parts of the thus obtained dried medium, 0.03 parts of an active compound for controlling soil-inhabiting pests, 0.01 parts of spores of Metarhizium anisopliae, and 30 parts of dextrin, were mixed in a universal mixer. The resulting mixture 30 g was tableted with the use of a mold having a diameter of 50 mm at a mold pressure of 1,000 kg/cm$^2$ to form tablets.

<u>Biotest Example 1</u>

Insecticidal test on Anomala cuprea

Test Method:

Soil of upland fields was filled into each of containers made from polypropylene (62 cm x 40 cm x 20 cm) and then the tablets prepared likewise the method of the above-mentioned Formulation 1 were embedded in the soil at a depth of 5 cm in each container and lightly covered with a soil layer. Into the soil of each container were inoculated twenty heads of Anomala cuprea at the first instar and a carrot was placed as bait on the soil surface.

Thirty days after the inoculation of the larvae, the surviving number of the larvae was determined in each container to figure out the mortality of the insects.

This test was carried out in duplicate and the thus obtained results are shown in Table 1.

Table 1

| Active compounds for controlling soil-inhabiting pests under test | Dosages | | Insect mortality (%) |
|---|---|---|---|
| | kg a.i./ha | piece/m$^2$ | |
| A | 0.3 | 4 | 100 |
| A | 0.3 | 9 | 100 |
| A | 0.6 | 4 | 100 |
| A | 0.6 | 9 | 100 |
| B | 0.6 | 4 | 95 |

Table 1 (continued)

| Active compounds for controlling soil-inhabiting pests under test | Dosages | | Insect mortality (%) |
|---|---|---|---|
| | kg a.i./ha | piece/$m^2$ | |
| B | 0.6 | 9 | 97 |
| Untreated zone | - | - | 0 |
| A : 1-(6-chloro-3-pyridylmethyl)-N-nitroimidazolidin-2-ylideneamine<br>B : N-cyano-N-(2-chloro-5-pyridylmethyl)-N'-methylaceto amidine | | | |

<u>Biotest Example 2</u>

Insecticidal test on Anomala cuprea

Test method:

Peanut plants were cultivated in a conventional manner on Kuroboku soil in an upland field consisting of a plurality of sections each having an area of 40 $m^2$ (5 m x 8 m). On August 10, 1992 (growing period of the plants after flowering), a predetermined amount of the tablets prepared likewise the method of the above-mentioned Formulation 2 were embedded in the soil of each section at a depth of 5 cm and lightly covered with a soil layer. In the harvest time (October 6, 1992), undamaged and damaged nutlets were surveyed for forty plants grown at the center area of each of the sections and the resulting protective value was calculated according to the following equation.

$$\text{Protective value} = \frac{\left(\begin{array}{c}\text{0 x number of}\\ \text{undamaged}\\ \text{legumes of the plants}\end{array}\right) + \left(\begin{array}{c}\text{1 x number of legumes}\\ \text{of the plants}\\ \text{(damage rate I)}\end{array}\right) + \left(\begin{array}{c}\text{4 x number of legumes of}\\ \text{of the plants}\\ \text{(damage rate II)}\end{array}\right)}{\text{(4 x the toral number of legumes of the plants)}} \times 100$$

Damage rate I = legumes only with devoured surface

Damage rate II = devoured nutlets observed

The results are shown in Table 2.

Table 2

| Active compound under test | Dosages | | Protective value (%) |
|---|---|---|---|
| | kg a.i./ha | piece/$m^2$ | |
| A | 0.3 | 9 | 90 |
| A | 0.6 | 9 | 90 |
| Untreated zone | - | - | 0 |
| A : 1-(6-chloro-3-pyridylmethyl)-N-nitroimidazolidin-2-ylideneamine | | | |

## Claims

1. Baits for controlling soil-inhabiting pests comprising active compounds represented by the general formula

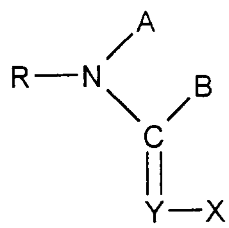

(I)

wherein R represents hydrogen atom, an acyl, alkyl, or an optionally substituted heteroarylalkyl,

R represents hydrogen atom, an alkyl or a divalent group connected to the substituent B,

B represents an alkyl, —S—R,

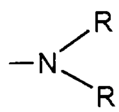

or a divalent group connected to the substituent A, wherein R has the same meaning as mentioned above,

Y represents =N- or

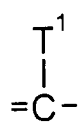

,

wherein $T^1$ represents hydrogen atom or an optionally substituted alkyl group, and

X represents an electron attractive group,

comprising as excipients materials used as artificial culture media for mushrooms selected from crushed or ground wood or wood chips of broadleaved trees and comprising binders selected from: Starch, soluble starch, $\alpha$-starch, dextrin, amylose, amiropectin, lignin, sodium lignin sulfonate, potassium ligninsulfonate, calcium ligninsulfonate, cellulose, methyl cellulose, ethyl cellulose, carboxymethyl cellulose, hydroxyethyl cellulose, hydroxypropyl cellulose, hydroxypropylmethyl cellulose, carboxymethyl starch, hydroxypropyl starch, sodium carboxymethyl cellulose, gum arabic, gelatin, casein, xanthane gum, alginic acid, sodium alginate, sodium silicate, polyvinyl alcohol, polypropylene glycol, polyethylenepolypropylene block polymer, sodium polyacrylate.

**2.** Baits for controlling soil-inhabiting pests according to claim 1, wherein the compounds represented by the general formula (I) are those in which

R represents hydrogen atom, formyl, a $C_{1-4}$-alkylcarbonyl, benzoyl, a $C_{1-4}$-alkylsulfonyl, $C_{1-6}$-alkyl, or an optionally substituted heteroarylmethyl having an up to six membered ring and at least one nitrogen atom and optionally one further hereo atom,

A represents hydrogen atom, $C_{1-4}$ alkyl or a divalent group selected from ethylene, trimethylene, or

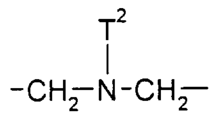

,

wherein $T^2$, represents hydrogen atom, $C_{1-4}$-alkyl or $C_{1-4}$-alkylcarbonyl,

B represents $C_{1-4}$-alkyl, —S—R,

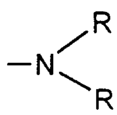

or a divalent group selected from -S-, methylene or

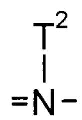

,

wherein R and $T^2$ have the same meanings as mentioned above,

Y represents =N- or =CH-, and

X represents nitro or cyano.

**3.** Baits for controlling soil-inhabiting pests according to claim 1, wherein the compounds represented by the general formula (I) are those in which

R represents 2-chloro-pyridylmethyl or 2-chloro-5-thiazolyl methyl,

A represents hydrogen atom, $C_{1-4}$-alkyl, or a divalent group selected from ethylene, trimethylene, or

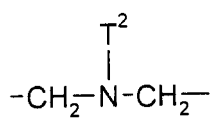

,

wherein $T^2$ represents methyl or ethyl,

B represents $C_{1-4}$-alkyl, —S—R',

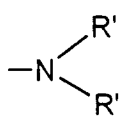

,

or a divalent group selected from -S-, methylene, or

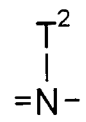

,

wherein R' represents hydrogen or $C_{1-4}$-alkyl and $T^2$ has the above mentioned meaning,

Y represents =N- or =CH-, and

X represents nitro or cyano.

**4.** Baits for controlling soil-inhabiting pests according to claim 1 in the form of granules or tablets in which the artificial culture medium for mushrooms selected from wood material is present in an amount of about 69,9% and the binder material is present in an amount of about 30%.

**Patentansprüche**

**1.** Köder zur steuernden Bekämpfung von BodenbewohnerSchädlingen, enthaltend Wirkverbindungen der allgemeinen Formel:

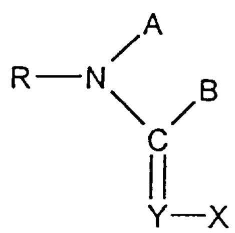

(I)

worin R ein Wasserstoffatom, einen Acyl-, Alkyl- oder einen gegebenenfalls substituierten Heteroarylalkylrest darstellt,

A ein Wasserstoffatom, einen Alkylrest oder eine mit dem Substituent B verbundene zweiwertige Gruppe darstellt,

B einen Alkylrest, -S-R,

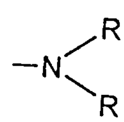

oder eine mit dem Substituent A verbundene zweiwertige Gruppe darstellt, worin R dieselbe Bedeutung wie oben hat,

Y =N- oder

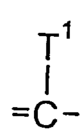

darstellt, worin $T^1$ ein Wasserstoffatom oder eine gegebenenfalls substituierte Alkylgruppe darstellt, und worin

X eine Elektronen anziehende Gruppe darstellt,

enthaltend als Exzipienten Materialien zur Verwendung als für Pilze vorgesehene künstliche Kulturmedien, ausgewählt aus zerkleinerten oder gemahlenem Holz oder Holzschnitzeln breitblättriger Bäume, und enthaltend Binder, ausgewhält aus Sträke, löslicher Stärke, α-Stärke, Dextrin, Amylose, Amylopektin, Lignin, Natriumligninsulfonat, Kaliumligninsulfonat, Calciumligninsulfonat, Cellulose, Methylcellulose, Ethylcellulose, Carboxytnethylcellulose, Hydroxyethylcellulose, Hydroxypropylcellulose, Hydroxypropylmethylcellulose, Carboxymethylstärke, Hydroxypropylstärke, Natriumcarboxymethycellulose, Gummi arabicum, Gelatine, Kasein, Xanthan-Gummi, Alginsäure, Natriumalginat, Natriumsilikat, Polyvinylalkohol, Polypropylenglycol, Polyethylen-Polypropylen-Blockpolymer und aus Natriumpolyacrylat.

**2.** Köder gemäß Anspruch 1 zur steuernden Bekämpfung von Bodenbewohner-Schädlingen, worin die Verbindungen der allgemeinen Formel (I) diejenigen sind, worin gilt:

R stellt ein Wasserstoffatom, einen Formyl-, $C_{1-4}$-alkylcarbonyl-, Benzoyl-, $C_{1-4}$-Alkylsulfonyl-, $C_{1-6}$-Alkyl- oder einen gegebenenfalls substituierbaren Heteroarylmethylrest mit mindestens bis zu einem 6-gliedrigen Ring und mindestens 1 Stickstoffatom und ferner einem gegebenenfalls ausgewählten Heteroatom oder -atomen dar,

A stellt ein Wasserstoffatom, einen $C_{1-4}$-Alkylrest oder eine zweiwertige Gruppe dar, ausgewählt aus einer Ethylen-, Trimethylen- oder einer $-CH_2-N-T^2-CH_2$-Gruppe, worin $T^2$ ein Wasserstoffatom, einen $C_{1-4}$-Alkyl- oder einen $C_{1-4}$-Alkylcarbonylrest darstellt,

B stellt einen $C_{1-4}$-Alkylrest, -S-R,

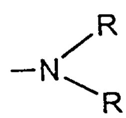

oder eine zweiwertige Gruppe dar, ausgewählt aus -S-, einer Methylen- oder einer

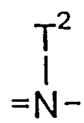

-Gruppe, worin R und $T^2$ dieselben Bedeutungen wie oben haben,

Y stellt =N- oder =CH- dar, und

X stellt eine Nitro- oder Cyanogruppe dar.

**3.** Köder gemäß Anspruch 1 zur steuernden Bekämpfung von Bodenbewohner-Schädlingen, worin die Verbindungen der allgemeinen Formel (I) diejenigen sind, worin gilt:

R stellt den 2-Chlor-5-pyridylmethyl- oder den 2-Chlor-5-thiazolylmethylrest dar,
A stellt ein Wasserstoffatom, einen $C_{1-4}$-Alkylrest oder eine zweiwertige Grupe dar, ausgewählt aus einer Ethylen-, Trimethylen- oder einer

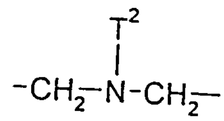

-Gruppe, worin $T^2$ einen Methyl- oder Ethylrest darstellt,
B stellt einen $C_{1-4}$-Alkylrest, -S-R',

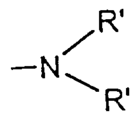

oder eine zweiwertige Gruppe dar, ausgewählt aus -S-, einer Methylen- oder einer

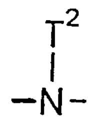

Gruppe, worin R' ein Wasserstoffatom oder einen $C_{1-4}$-Alkylrest darstellt und $T^2$ die oben angegebene Bedeutung hat,
Y stellt =N- oder =CH- dar, und
X stellt eine Nitro- oder Cyanogruppe dar.

**4.** Köder gemäß Anspruch 1 zur steuernden Bekämpfung von Bodenbewohner-Schädlingen in der Form von Körnern oder Tabletten, worin das aus Holzmaterial ausgewählte künstliche Kulturmedium für Pilze in einer Menge von ca. 69,9 % und das Bindermaterial in einer Menge von ca. 30% vorhanden sind.

**Revendications**

**1.** Appâts destinés à combattre des parasites terricoles, comprenant des composés actifs représentés par la formule générale :

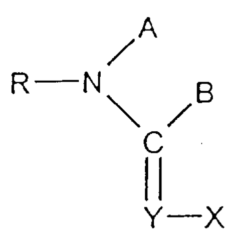

(I)

dans laquelle R représente un atome d'hydrogène, un groupe acyle, un groupe alkyle ou un groupe hétéroarylalkyle facultativement substitué,

R représente un atome d'hydrogène, un groupe alkyle ou un groupe divalent lié au substituant B,
B représente un groupe alkyle, —S—R,

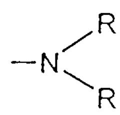

ou un groupe divalent lié au substituant A, où R a la même définition que ci-dessus,

Y représente =N- ou un groupe

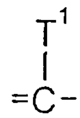

dans lequel $T^1$ représente un atome d'hydrogène ou un groupe alkyle facultativement substitué, et

X représente un groupe attirant les électrons,

comprenant comme excipients des matières utilisées comme milieux artificiels pour la culture de champignons telles que du bois broyé ou moulu ou des copeaux de bois d'arbres feuillus et comprenant des liants choisis entre : l'amidon, l'amidon soluble, l'amidon $\alpha$, la dextrine, l'amylose, l'aminopectine, la lignine, le lignosulfonate de sodium, le lignosulfonate de potassium, le lignosulfonate de calcium, la cellulose, la méthylcellulose, l'éthylcellulose, la carboxyméthylcellulose, l'hydroxyéthylcellulose, l'hydroxypropylcellulose, l'hydroxypropylméthylcellulose, le carboxyméthylamidon, l'hydroxypropylamidon, la carboxyméthylcellulose sodique, la gomme arabique, la gélatine, la caséine, la gomme xanthane, l'acide alginique, l'alginate de sodium, le silicate de sodium, un polymère d'alcool vinylique, un polypropylèneglycol, un polymère séquencé polyéthylènepolypropylène, un polyacrylate de sodium.

**2.** Appâts destinés à combattre des parasites terricoles suivant la revendication 1, dans lequels les composés représentés par la formule générale (I) sont des composés dans lesquels

R représente un atome d'hydrogène, un groupe formyle, un groupe (alkyle en $C_1$ à $C_4$)-carbonyle, benzoyle, (alkyle en $C_1$ à $C_4$)-sulfonyle, alkyle en $C_1$ à $C_6$ ou un groupe hétéroaryl-méthyle facultativement substitué à noyau ayant jusqu'à 6 chaînons et ayant au moins un atome d'azote et facultativement un autre hétéroatome,

A représente un atome d'hydrogène, un groupe alkyle en $C_1$ à $C_4$ ou un groupe divalent choisi entre éthylène, triméthylène ou un groupe

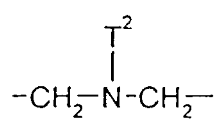 ,

dans lequel $T^2$ représente un atome d'hydrogène, un groupe alkyle en $C_1$ à $C_4$ ou (alkyle en $C_1$ à $C_4$)-carbonyle,

B représente un groupe alkyle en $C_1$ à $C_4$, —S—R,

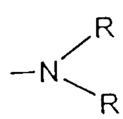

ou un groupe divalent choisi entre -S-, un groupe méthylène ou un groupe

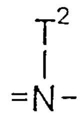

,

dans lequel R et $T^2$ ont les mêmes définitions que ci-dessus,

Y représente =N- ou =CH-, et

X représente un groupe nitro ou cyano.

**3.** Appâts destinés à combattre des parasites terricoles suivant la revendication 1, dans lequels les composés représentés par la formule générale (I) sont des composés dans lesquels

R représente un groupe 2-chloro-pyridylméthyle ou 2-chloro-5-thiazolylméthyle,

A représente un atome d'hydrogène, un groupe alkyle en $C_1$ à $C_4$ ou un groupe divalent choisi entre éthylène, triméthylène ou un groupe

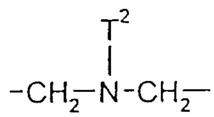

dans lequel $T^2$ représente un groupe méthyle ou éthyle,

B représente un groupe alkyle en $C_1$ à $C_4$, —S—R',

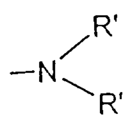

ou un groupe divalent choisi entre -S-, méthylène ou un groupe

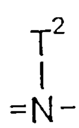

,

où R' représente de l'hydrogène ou un groupe alkyle en $C_1$ à $C_4$ et $T^2$ a la définition donnée ci-dessus,

Y représente =N- ou =CH-, et

X représente un groupe nitro ou cyano.

**4.** Appâts destinés à combattre des parasites terricoles suivant la revencication 1, sous forme de granulés ou de tablettes dans lesquels le milieu artificiel de culture de champignons choisi parmi des matières ligneuses est présent en une quantité d'environ 69,9 % et le liant est présent en une quantité d'environ 30 %.